# EUROPÄISCHE PATENTANMELDUNG

(11) **EP 1 413 813 A1**
(43) Veröffentlichungstag der Anmeldung: **28.04.2004**
(21) Anmeldenummer: 03103482.0
(22) Anmeldetag: 22.09.2003
(51) Int. Cl.: F16L 11/127, F16L 11/118, F16L 9/12

(54) **Schlauch für eine Kraftstoff-Fördereinrichtung**

(30) Priorität: 21.10.2002 DE 10248978
(71) Anmelder: SIEMENS AKTIENGESELLSCHAFT, 80333 München (DE)
(72) Erfinder: Eck, Karl, 60318, Frankfurt/Main (DE); Reichelt, Sabine, 63263, Neu-Isenburg (DE)

(57) **Zusammenfassung**

Bei einem Schlauch für eine Kraftstoff-Fördereinrichtung eines Kraftfahrzeuges ist eine Wandung (3) aus elektrisch nicht leitendem Kunststoff mit einem elektrischen Leiter (4) gefertigt. Der elektrische Leiter (4) lässt sich mit einer Masse (5) des Kraftfahrzeuges verbinden und verhindert bei einer Strömung von Kraftstoff durch den Schlauch elektrische Aufladungen. Die Wandung (3) des Schlauches lässt sich aus besonders kostengünstigem Kunststoff fertigen

## Beschreibung

Die Erfindung betrifft einen Schlauch für eine Kraftstoff-Fördereinrichtung eines Kraftfahrzeuges mit einer elastischen und elektrisch leitfähigen Wandung.

Solche Schläuche werden häufig in Vorlaufleitungen von Kraftstoff-Fördereinrichtungen eingesetzt. Insbesondere bei sogenannten Common-Rail-Anwendungen werden hohe Volumenströme durch den Schlauch gefördert. Um elektrische Aufladungen des Schlauches zu vermeiden, sind aus der Praxis Schläuche mit einer Wandung aus elektrisch leitfähigem Gummi bekannt geworden. Solche Schläuche sind jedoch sehr kostenintensiv zu fertigen.

Der Erfindung liegt das Problem zugrunde, einen Schlauch der eingangs genannten Art so zu gestalten, dass er besonders kostengünstig herstellbar ist.

Dieses Problem wird erfindungsgemäß dadurch gelöst, dass die Wandung aus einem elektrisch nicht leitenden Kunststoff besteht und zumindest einen mit einem Ende des Schlauches verbundenen elektrischen Leiter hat.

Durch diese Gestaltung lässt sich der erfindungsgemäße Schlauch aus einem besonders kostengünstigen und/oder besonders einfach zu verarbeitenden Kunststoff fertigen. Der elektrische Leiter führt durch einen hohen Volumenstrom erzeugte, elektrische Aufladungen über ein Ende des Schlauches ab. Hierdurch lässt sich der erfindungsgemäße Schlauch besonders kostengünstig fertigen.

Der erfindungsgemäße Schlauch gestaltet sich konstruktiv besonders einfach, wenn der elektrische Leiter parallel zur Achse des Schlauches oder umlaufend auf der Oberfläche der Wandung angeordnet ist. Der elektrische Leiter kann beispielsweise ein Draht sein.

Die Verbindung des elektrischen Leiters mit der Wandung erfordert gemäß einer anderen vorteilhaften Weiterbildung der Erfindung einen besonders geringen Aufwand, wenn der elektrische Leiter als stoffschlüssig oder formschlüssig mit der Wandung verbundene Bahn ausgebildet ist. Eine solche Bahn lässt sich beispielsweise auf die Wandung aufdrucken.

Die Wandung des erfindungsgemäßen Schlauches lässt sich aus nahezu beliebigen Materialien fertigen, wenn die Wandung eine Ummantelung aufweist und wenn die Ummantelung aus leitfähigem Material gefertigt ist oder einzelne leitfähige Fasern enthält.

Die Ummantelung erhöht die Stabilität des erfindungsgemäßen Schlauches, wenn die Ummantelung als Gewebeschlauch ausgebildet ist.

Zur weiteren Verringerung der Aufladung des erfindungsgemäßen Schlauches trägt es bei, wenn der elektrische Leiter die Außenseite und/oder die Innenseite der Wandung elektrisch leitend miteinander verbindet.

Zur weiteren Verringerung der Fertigungskosten des erfindungsgemäßen Schlauches trägt es bei, wenn der elektrische Leiter aus leitfähigem Kunststoff gefertigt ist.

Die Verbindung des elektrischen Leiters mit nicht leitenden Teilen der Wandung hat gemäß einer anderen vorteilhaften Weiterbildung der Erfindung eine besonders hohe Stabilität, wenn der Leiter als Teil der Wandung ausgebildet ist. Zur Herstellung lässt sich der Leiter einfach während der Fertigung des erfindungsgemäßen Schlauches im Spritzgussverfahren in die Wandung einspritzen. Alternativ dazu kann der Leiter auch auf die Wandung aufgespritzt werden.

Die Wandung des erfindungsgemäßen Schlauches könnte beispielsweise eine ebene Oberfläche haben. Der erfindungsgemäße Schlauch lässt sich jedoch besonders einfach verlegen, wenn er als Wellschlauch ausgebildet ist.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine Ansicht auf einen erfindungsgemäßen Schlauch,
- Fig.2: eine weitere Ausführungsform des erfindungsgemäßen Schlauches,
- Fig.3: eine weitere Ausführungsform des erfindungsgemäßen Schlauches im Querschnitt,
- Fig.4: einen Querschnitt durch eine weitere Ausführungsform des erfindungsgemäßen Schlauches.

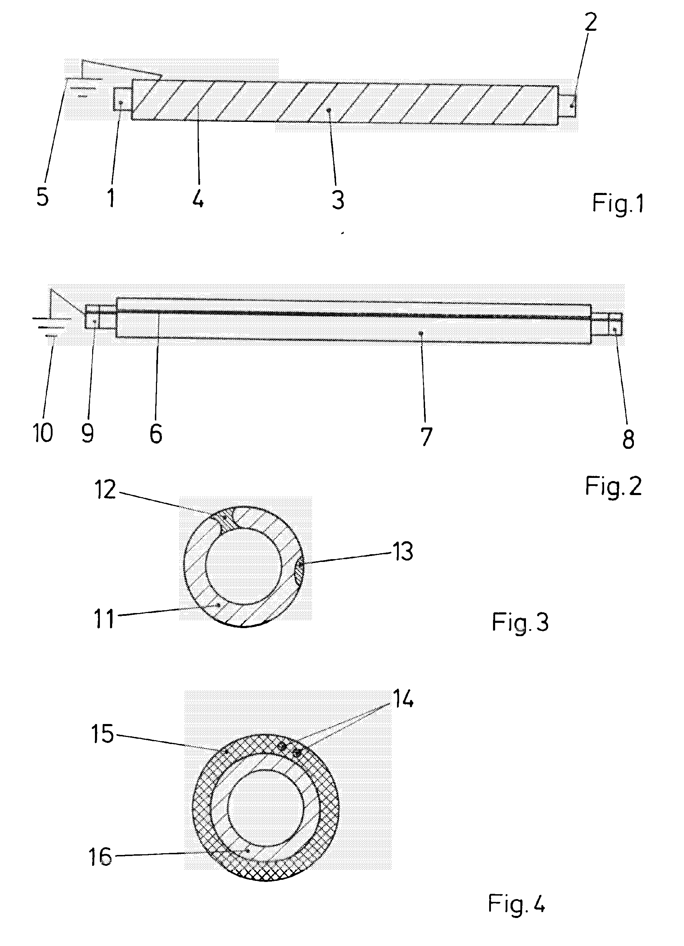

Figur 1 zeigt einen Schlauch mit an dessen Enden angeordneten Anschlussstutzen 1, 2. Der Schlauch hat eine Wandung 3 aus elektrisch nicht leitendem Kunststoff und einen darauf umlaufend angeordneten elektrischen Leiter 4. Der Schlauch ist für den Einsatz in einer Vorlaufleitung einer nicht dargestellten Kraftstoff-Fördereinheit eines Kraftfahrzeuges vorgesehen und hat über den elektrischen Leiter 4 eine Verbindung mit einer Masse 5 des Kraftfahrzeuges. Der elektrische Leiter 4 kann beispielsweise ein auf der Wandung 3 des Schlauches aufgewickelter Draht oder eine aufgeklebte Leiterbahn sein. Der Schlauch hat eine ebene Oberfläche. In einer alternativen, nicht dargestellten Ausführungsform kann der Schlauch auch als Wellschlauch mit einer wellenförmigen Wandung ausgebildet sein.

Figur 2 zeigt eine weitere Ausführungsform des Schlauches, bei dem ein elektrischer Leiter 6 parallel zur Achse des Schlauches auf einer elektrisch nicht leitenden Wandung 7 angeordnet ist. Der elektrische Leiter 6 verbindet zwei auf den Enden des Schlauches angeordnete Anschlussstutzen 8, 9. Einer der Anschlussstutzen 9 hat eine Verbindung mit einer Masse 10 des Kraftfahrzeuges.

Figur 3 zeigt eine weitere Ausführungsform des Schlauches, bei der in einer elektrisch nicht leitenden Wandung 11 zwei elektrische Leiter 12, 13 angeordnet sind. Einer der elektrischen Leiter 12 durchdringt die Wandung 11 und stellt damit eine Verbindung mit in dem Schlauch geführten Kraftstoff her. Der andere elektrische Leiter 13 ist auf der Außenseite der Wandung 11 angeordnet. Die beiden elektrischen Leiter 12, 13 sind stoffschlüssig mit der Wandung 11 des Schlauches und aus elektrisch leitfähigem Kunststoff gefertigt. Der Schlauch lässt sich beispielsweise im Extrudierverfahren fertigen, indem der Kunststoff der elektrischen Leiter 12, 13 zusammen mit dem Kunststoff der Wandung 11 in das Extrusionswerkzeug eingebracht werden. Der die Wandung 11 nicht durchdringende elektrische Leiter 13 kann alternativ dazu auch in einem abschließenden Arbeitsgang auf die Wandung 11 aufgespritzt werden.

Figur 4 zeigt eine weitere Ausführungsform des Schlauches, bei dem ein elektrischer Leiter 14 in einer Ummantelung 15 der aus elektrisch nicht leitendem Material gefertigten Wandung 16 angeordnet ist. Die Ummantelung 15 kann als leitfähiger Gewebeschlauch oder als Gewebeschlauch mit einzelnen leitfähigen Fasern ausgebildet sein.

## Patentansprüche

1. Schlauch für eine Kraftstoff-Fördereinrichtung eines Kraftfahrzeuges mit einer elastischen und elektrisch leitfähigen Wandung, **dadurch gekennzeichnet, dass** die Wandung (3, 7, 11, 16) aus einem elektrisch nicht leitenden Kunststoff besteht und zumindest einen mit einem Ende des Schlauches verbundenen elektrischen Leiter (4, 6, 12 - 14) hat.

2. Schlauch nach Anspruch 1, **dadurch gekennzeichnet, dass** der elektrische Leiter (4, 6, 12 - 14) parallel zur Achse des Schlauches oder umlaufend auf der Oberfläche der Wandung (3, 7, 11, 16) angeordnet ist.

3. Schlauch nach Anspruch 1 oder 2, **dadurch gekennzeichnet, dass** der elektrische Leiter (4, 6, 12, 13) als stoffschlüssig oder formschlüssig mit der Wandung (3, 7, 11) verbundene Bahn ausgebildet ist.

4. Schlauch nach zumindest einem der vorhergehenden Ansprüche, **dadurch gekennzeichnet, dass** die Wandung (16) eine Ummantelung (15) aufweist und dass die Ummantelung (15) aus leitfähigem Material gefertigt ist oder einzelne leitfähige Fasern enthält.

5. Schlauch nach zumindest einem der vorhergehenden Ansprüche, **dadurch gekennzeichnet, dass** die Ummantelung (15) als Gewebeschlauch ausgebildet ist.

6. Schlauch nach zumindest einem der vorhergehenden Ansprüche, **dadurch gekennzeichnet, dass** der elektrische Leiter (12) die Außenseite und/oder die Innenseite der Wandung (11) elektrisch leitend miteinander verbindet.

7. Schlauch nach zumindest einem der vorhergehenden Ansprüche, **dadurch gekennzeichnet, dass** der elektrische Leiter (4, 6, 12 - 14) aus leitfähigem Kunststoff gefertigt ist.

8. Schlauch nach zumindest einem der vorhergehenden Ansprüche, **dadurch gekennzeichnet, dass** der Leiter (4, 6, 12, 13) als Teil der Wandung (3, 7, 11) ausgebildet ist.

9. Schlauch nach zumindest einem der vorhergehenden Ansprüche, **dadurch gekennzeichnet, dass** der Schlauch als Wellschlauch ausgebildet ist.
